# EUROPEAN PATENT APPLICATION

(11) **EP 1 710 673 A2**
(43) Date of publication of application: **11.10.2006**
(21) Application number: 06251456.7
(22) Date of filing: 17.03.2006
(51) Int. Cl.: G06F 3/048

(54) **Method, program and device for displaying menu**

(30) Priority: 17.03.2005 JP 2005077792; 17.03.2005 JP 2005077793; 17.03.2005 JP 2005077794
(71) Applicant: CLARION Co., Ltd., Bunkyo-ku, Tokio (JP)
(72) Inventor: Yahiro, Takao, Bunkyo-ku Tokyo (JP); Suwa, Manae, Bunkyo-ku Tokyo (JP)
(74) Representative: Smith, Samuel Leonard

(57) **Abstract**

A method of displaying a menu including a plurality of menu items. The method includes the steps of displaying an orbital menu by arranging the plurality of menu items on a looped orbital, first detecting a signal for switching the orbital menu, extracting a menu item located at a predetermined position on the orbital and at least one menu items located around the menu item located at a predetermined position, and displaying an extracted menu by arranging the extracted menu items with retaining correlation among the menu items on the orbital menu.

## Description

### Cross Reference to Related Application

This application claims priority from Japanese Patent Applications No. 2005-077792, No. 2005-077793 and No. 2005-077794, all filed on March 17, 2005, the entire subj ect matters of which are incorporated herein by reference.

### Background

Aspects of the present invention relates to a method of displaying/editing a menu containing a plurality of menu items, and a program and a device therefor.

Electronic devices and information terminals of today generally have a large number of functions and a display screen capable of displaying a menu containing a plurality of menu items representing various functions, etc. Such menu items are arranged on the menu in matrix structure, for example. However, there are electronic devices and information terminals which have relatively small display screens (e.g., cell phones and PDA (Personal Digital Assistance), car navigation device, etc.). When the menu items are arranged in matrix (i.e., two-dimensionally), the number of menu items displayed in the display screen is limited, and it is impossible to display a large number of menu items at a time.

In order to deal with the above problem, various menu displaying devices/methods which show menu items appearing to be arranged three-dimensionally have been suggested. Examples of such a three-dimensional arrangement are disclosed in Japanese Patent Provisional Applications No. P2003-330586A and No. P2004-227393A. By displaying a menu in such a three-dimensional arrangement, a large number of menu items can be displayed on the menu screen at a time, by which the user is allowed to grasp correlations among the menu items (e.g. positional relationship among the menu items) with ease.

Incidentally, the electronic devices and information terminals generally have a large number of functions, and therefore, the menu includes a large number of menu items. When the menu items are arranged two-dimensionally or three-dimensionally, it sometimes occur that menu items frequently used are distributed in various locations. In such a case, the user may be required to perform troublesome operations to achieve desired operations. To deal with this problem, devices in which the user can edit the menu have been suggested. An example of such a device is disclosed in Japanese Patent Provisional Publication No. HEI 5-173693.

Recently, vehicle mounted devices having a navigation function have been widely used by various users. Such vehicle mounted devices generally have a large number of functions, and therefore, the number of menu items has increased.

In such devices, if the number of menu items is relatively large, and all the menu items are to be displayed, the size of each item becomes too small. Such a status is inconvenient, and in particular, for a user who does not have a good sight, such a menu cannot be used. To deal with the problem, Japanese Patent Provisional Publication P2001-175384A discloses a menu display device in which an animated image corresponding to a currently selected menu item is displayed so as to notify the user of the currently selected menu and/or category thereof. With this configuration, the user can easily recognize the currently selected menu items, and operate the menu.

The display control device disclosed in Japanese Patent Provisional Publication No. P2003-330586A cannot display all the menu items in one display screen. If it is configured to display all the menu items, the size of each item should be reduced. In such a case, the visibility of the menu is lowered, and as a result, the menu becomes difficult to use.

In the device disclosed in Japanese Patent Provisional Publication No. P2004-227393A, since the number of menu items is relatively small, all the menu items can be displayed in the same display screen, and the size of each menu item is remained to be sufficiently large. However, if the number of the menu items is increased, the same problem described above will occur. That is, the display size of each menu item should be reduced and the visibility may be considerably lowered.

In the meantime, when there are a plurality of menu items, is it preferable that the user can grasp the correlation among the menu items. In particular, when the menu is edited, it is necessary that the user can easily recognize the editing contents. In this respect, the menu editing device disclosed in Japanese Patent Provisional Publication No. HEI 5-173693 is insufficient.

The animated image functioning to support the menu operation disclosed in Japanese Patent Provisional Publication P2001-175384A is convenient for a person who does not have a good sight. However, for a person having a good sight and for a person who know the structure of the menu, such a function is unnecessary. Further, such a function would be a burden to the control unit and image processing unit. In this regard, the function is disadvantage for the device. That is, for the general user, it may be more important to display as many menu item as possible and reduce the troublesome operations such as scrolling of the menu screen.

### Summary

In consideration of the above problems, aspects of the invention provide an improved menu displaying method, program and device. According to aspects of the invention, even if a large number of menu items are displayed on a display so that the user can grasp the correlation among the menu items, the user can recognize the menu items to be selected by the user easily.

Further, aspects of the invention provide an improved menu editing device, which allows the user to understand the editing contents visually and sensuously.

Furthermore, aspects of the invention provide an improved vehicle mounted device configured to provide a menu capable of reflecting the user's request.

### General Overview

It is noted that various connections are set forth between elements in the following description. It is noted that these connections in general and unless specified otherwise, may be direct or indirect and that this specification is not intended to be limiting in this respect. Aspects of the invention may be implemented in computer software as programs storable on computer-readable media including but not limited to RAMs, ROMs, flash memory, EEPROMs, CD-media, DVD-media, temporary storage, hard disk drives, floppy drives, permanent storage, and the like.

According to aspects of the invention, there is provided a method of displaying a menu including a plurality of menu items. The method includes the steps of displaying an orbital menu by arranging the plurality of menu items on a looped orbital, first detecting a signal for switching the orbital menu, extracting a menu item located at a predetermined position on the orbital and at least one menu items located around the menu item located at a predetermined position, and displaying an extracted menu by arranging the extracted menu items with retaining correlation among the menu items on the orbital menu.

The method may further include the steps of selecting one of the menu items on the orbital, and moving all the menu items with the order thereof being retained so that the selected one of the menu items is located at a predetermined position.

When the extracted menu is displayed, the menu item located at the predetermined position may be displayed to be largest in size.

The method may further include the steps of second detecting signal for switching the extracted menu, and displaying all the menu items with the correlation among the menu items being retained when the signal is detected by the second detecting.

The method may further include the step of arranging the menu item displayed to have the largest size at the predetermined position when the menu is switched to the orbital menu.

The step of displaying the orbital menu may include a step of displaying the orbital three-dimensionally in a virtual three-dimensional space.

The step of displaying the orbital menu may include a step of displaying the orbital two-dimensionally in a virtual two-dimensional space.

The looped orbital has an annular shape.

The method may further include the step of displaying the orbital menu with being categorized.

In a particular case, the categorization is indicated by color.

According to aspects of the invention, there is provided a computer program product having a computer accessible instructions that cause a computer to execute the steps of displaying a menu including a plurality of menu items, displaying an orbital menu by arranging the plurality of menu items on a looped orbital, first detecting a signal for switching the orbital menu, extracting a menu item located at a predetermined position on the orbital and at least one menu items located around the menu item located at a predetermined position, and displaying an extracted menu by arranging the extracted menu items with retaining correlation among the menu items on the orbital menu.

The instructions may further cause the computer to execute the steps of selecting one of the menu items on the orbital, and moving all the menu items with the order thereof being retained so that the selected one of the menu items is located at a predetermined position.

When the extracted menu is displayed, the menu item located at the predetermined position may be displayed to be largest in size.

The instructions may further cause the computer to execute the steps of second detecting signal for switching the extracted menu, and displaying all the menu items with the correlation among the menu items being retained when the signal is detected by the second detecting.

The method may further include a step of arranging the menu item displayed to have the largest size at the predetermined position when the menu is switched to the orbital menu.

The step of displaying the orbital menu may include the step of displaying the orbital three-dimensionally in a virtual three-dimensional space.

The step of displaying the orbital menu includes the step of displaying the orbital two-dimensionally in a virtual two-dimensional space.

According to aspects of the invention, there is provided a menu displaying device configured to display a menu including a plurality of menu items. The menu displaying device is provided with an orbital menu displaying unit configured to display an orbital menu by arranging the plurality of menu items on a looped orbital, an operable member used to operate a menu, a first detecting unit configured to detect a signal, which is issued in response to operation of the operable member, for switching the orbital menu, an extracting unit configured to extract a menu item located at a predetermined position on the orbital and at least one menu items located around the menu item located at a predetermined position, and an extracted menu displaying unit configured to display an extracted menu by arranging the extracted menu items with retaining correlation among the menu items on the orbital menu.

When one of the menu items on the orbital is selected by operation of the operable member, the orbital menu displaying unit operates to draw an image such that all the menu items are moved with the order thereof being retained so that the selected one of the menu items is located at a predetermined position.

When the menu is switched to the extracted menu, the extracted menu displaying unit may display a menu item located at the predetermined position to have the largest size.

The menu displaying device may further include a second signal detecting unit that detects the second signal, which is issued in response to the operation of the operable member, for switching the extracted menu. When the signal is detected by the second detecting unit, all the menu items are displayed with the correlation among the menu items being retained

When switched to the orbital menu, the orbital menu displaying unit arranges the menu item displayed to have the largest size at the predetermined position.

The orbital menu displaying unit may display the orbital three-dimensionally in a virtual three-dimensional space.

The orbital menu displaying unit may display the orbital two-dimensionally in a virtual two-dimensional space.

According to aspects of the invention, there is provided a method of editing a menu including a plurality of menu items arranged on a predetermined orbital, including the steps of removing one of the plurality of menu items from the orbital, moving the removed menu to a predetermined position in the menu screen, and performing a predetermined editing process in accordance with the position where the menu is move.

The step of performing deletes the menu item moved to the predetermined position from the menu.

The step of performing may hold the menu item moved to the predetermined position at the predetermined position, and the step of performing may insert the held menu item between arbitrarily selected menu items on the orbital, the inserted menu item being held between the arbitrarily selected menu items.

According to aspects of the invention, there is provided a method of editing first menu including a plurality of menu items arranged on a first orbital. The method includes the steps of removing one of a plurality of menu items included in a second menu, which is different from the first menu, arranged on a second orbital which is different from the first orbital, moving the menu item removed from the second orbital to a predetermined position in a screen of the second menu, and adding the menu item moved to the predetermined position to the first menu.

The method may further include a step of arranging a menu item having a high usage frequency in the second menu prior to other menu items.

A menu item having the lowest usage frequency may be removed from the first menu when the step of adding adds the menu item to the first menu.

The method may further include a step of arranging a menu item regarding new information in the second menu prior to other menu items.

A menu item which was processed earliest may be removed from the first menu when the step of adding adds the menu item to the first menu.

Aspects of the invention provide a method of editing menu including a plurality of menu items. The method includes the steps of displaying orbital menu by arranging the plurality of menu items on a looped orbital, first detecting a signal causing to switch the orbital menu, extracting a menu item located at a predetermined position on the orbital and at least one menu items located around the menu item located at the predetermined position, displaying an extracted menu by arranging the extracted menu items with retaining correlation among the menu items on the orbital menu, removing one of the menu items from the extracted menu moving the removed one of the menu items to a predetermined position in the extracted menu, and executing a predetermined edition process in accordance with the position where the removed one of the menu items is moved.

Aspects of the invention provide a computer program product including computer readable instructions that cause a computer to operate to edit a menu including a plurality of menu items which are arranged on a predetermined orbital. The instructions further cause the computer to arrange at least one icon for executing at least one predetermined editing procedure at least a position within a screen provided by the menu, allow a menu item to move within the menu screen in response to selection of the menu item by a user, and execute a predetennined operation corresponding to the icon when the selected menu item is moved onto the icon.

The predetermined operation may include deletion of the menu item moved to the at least one icon from the menu.

The predetermined operation may includes the step of causing the menu item moved to at least one icon to be held by the icon, and causing the menu item to be held between other menu items on the orbital when the menu item held by the icon is inserted between the other menu items on the orbital.

According to aspects of the invention, there is provided a computer program product comprising computer readable instructions that cause a computer to execute a method of editing first menu including a plurality of menu items arranged on a first orbital. The method may include the steps of removing one of a plurality of menu items included in a second menu, which is different from the first menu, arranged on a second orbital which is different from the first orbital, moving the menu item removed from the second orbital to a predetermined position in a screen of the second menu, adding the menu item moved to the predetermined position to the first orbital, moving the menu item removed from the second orbital to a predetermined position in a screen of the second menu, and adding the menu item moved to the predetermined position to the first menu.

According to aspects of the invention, there is provided a computer program product comprising computer readable instructions that cause a computer to execute a method of editing menu including a plurality of menu items. The method includes the steps of displaying orbital menu by arranging the plurality of menu items on a looped orbital, first detecting a signal causing to switch the orbital menu, extracting a menu item located at a predetermined position on the orbital and at least one menu items located around the menu item located at the predetermined position, displaying an extracted menu by arranging the extracted menu items with retaining correlation among the menu items on the orbital menu, removing one of the menu items from the extracted menu, moving the removed one of the menu items to a predetermined position in the extracted menu, and executing a predetermined edition process in accordance with the position where the removed one of the menu items is moved.

According to aspects of the invention, there is provided a menu editing device configured to edit menu including a plurality of menu items arranged on a predetermined orbital. The menu editing device includes an icon arranging unit configured to arrange an icon for executing a predetermined editing procedure at a position within a menu screen provided by the menu, an operable member used to operate the menu, a selection detecting unit that detects a selection of one of the plurality of menu items by the operable member, a movement control unit that controls the menu item detected to be selected to move in the menu screen, and an edit processing unit configured to execute, when the menu item is moved onto an icon, a predetermined edit process corresponding to the icon.

The edit processing unit may delete the menu item moved onto the icon from the menu.

The edit processing unit may hold the menu item moved onto the icon on the icon, and, when the menu item held on the icon is moved between arbitrarily selected menu items on the orbital, the edit processing unit may hold the menu item between the arbitrarily selected menu items.

A menu editing device configured to edit a first menu including a plurality of menu items arranged on a first orbital. The menu editing device may include an icon arranging unit configured to arrange an icon for executing a predetermined editing procedure at a position within a menu screen provided by a second menu, which is different from the first menu and including a plurality of menu items on a second orbital different from the first orbital, an operable member used to operate the first menu and the second menu, a selection detecting unit that detects a selection of one of the plurality of menu items of the second menu by the operable member, a movement control unit that controls the menu item detected to be selected to move in the menu screen of the second menu, and an edit processing unit configured to add, when the menu item is moved onto an icon, the menu item to the first menu.

According to aspects of the invention, there is provided a menu editing device configured to edit a menu including a plurality of menu items. The menu editing device includes an orbital menu displaying unit that displays an orbital menu by arranging the plurality of menu items on a looped orbital, an operable member to operate the menu, a first signal detecting unit configure to detect a signal, which is output in response to operation of the operable member, for switching the orbital menu, an extracting unit configure to extract a menu item located at a predetermined position on the orbital and at least one menu items located around the menu item located at the predetermined position, an extracted menu displaying unit configure to display an extracted menu by arranging the extracted menu items with retaining correlation among the menu items on the orbital menu, an icon arranging unit that arranges an icon for executing a predetermined editing operation at an portion within a menu screen provided by the extracted menu, a selection detecting unit that detects selection, by the operable member, of the a menu item in the extracted menu, a movement control unit that controls movement of the detected menu item in the extracted menu, and an edit processing unit that executes a predetermined edition process, when the movable menu item is moved onto the icon, in accordance with the icon.

According to aspects of the invention, there is provided a vehicle-mounted system, which is provided with an input unit used for inputting predetermined information assigned to each user, a storage unit storing a plurality of pieces of menu setting information related to the predetermined information, a data retrieving unit configured to retrieve, in accordance with input predetermined information, corresponding menu setting information from the storage unit, and a menu displaying unit configured to refer to the retrieved menu setting information and displays a menu in a form corresponding to the menu setting information.

The menu setting information may include a setting of visibility of the menu.

The menu setting information may include at least one of a size, a type of a font of character string included in the menu, the number of menu items, a display size, a content of the menu, an overall layout of the menu, and a color of the menu.

The input unit may include an operation unit allowing a user to input a password.

The input unit may include an authentication unit capable of executing a biometrics authentication.

According to aspects of the invention, there is provided a vehicle-mounted system, which is provided with an input unit used for inputting predetermined information, a storage unit storing a plurality of pieces of menu setting information related to the predetermined information, a data retrieving unit configured to retrieve, in accordance with input predetermined information, corresponding menu setting information from the storage unit, and a menu displaying unit configured to refer to the retrieved menu setting information and displays a menu in a form corresponding to the menu setting information.

The predetermined information may include at least one of age and a power of vision.

### Brief Description of the Accompanying Drawings

The objects and features of the present invention will become more apparent from the consideration of the following detailed description taken in conjunction with the accompanying drawings.
Fig. 1 is a block diagram showing the composition of a vehicle-mounted system including a menu displaying device in accordance with a first embodiment of the present invention.
Figs. 2A and 2B show menu screens according to the first embodiment.
Fig. 3 shows a flowchart illustrating a menu display procedure according to the first embodiment.
Fig. 4 shows a menu screen according to a second embodiment.
Fig. 5 shows a menu screen according to a third embodiment.
Figs. 6A and 6B show menu screens according to a fourth embodiment.
Fig. 7 shows a flowchart illustrating a menu display procedure according to a fourth embodiment.
Figs. 8 and 9 show a flowchart illustrating a menu editing procedure according to a fourth embodiment.
Fig. 10 shows a menu screen according to the fourth embodiment.
Fig. 11 shows a part of the menu editing procedure according to the fourth embodiment.
Fig. 12 shows a menu screen according to the fourth embodiment.
Fig. 13 shows a user account selection screen according to a fifth embodiment.
Figs. 14A, 14B, 15 and 16 show exemplary menu screens for user 1 according to the fifth embodiment.
Fig. 17 shows an exemplary menu screen for user 1 according to the fifth embodiment.

### Detailed Description of the Embodiments

Referring now to the drawings, a vehicle-mounted system provided with a menu displaying device according to aspects of the invention will be described in detail.

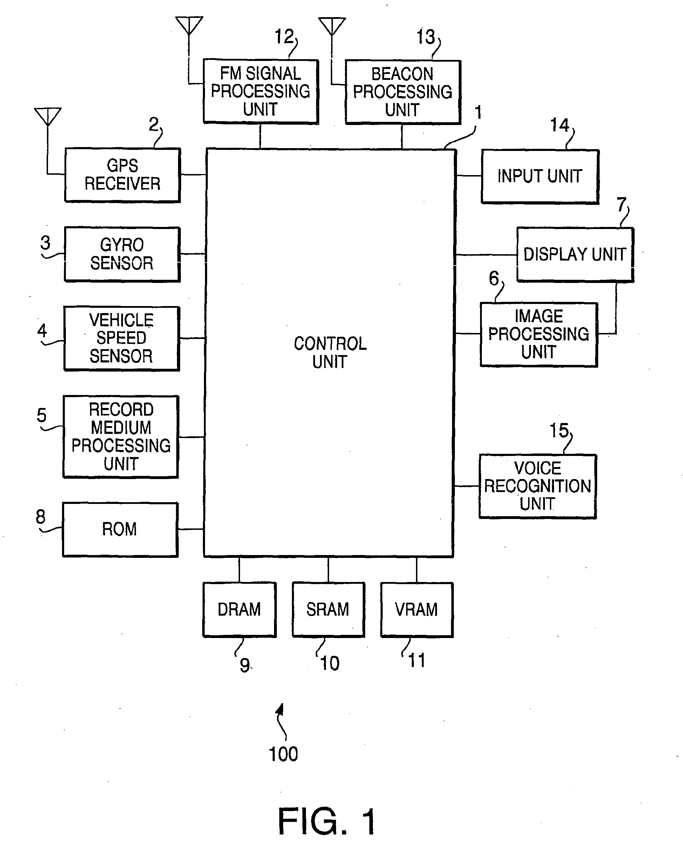

Fig. 1 is a block diagram showing the composition of a vehicle-mounted system 100 including a menu displaying device in accordance with an embodiment of the present invention. The vehicle-mounted system 100, having a navigation function and a radio/television function, includes a control unit 1, a GPS (Global Positioning System) receiver 2, a gyro sensor 3, a vehicle speed sensor 4, a record medium processing unit 5, an image processing unit 6, a display unit 7, a ROM (Read Only Memory) 8, a DRAM (Dynamic Random Access Memory) 9, an SRAM (Static Random Access Memory) 10, a VRAM (Video Random Access Memory) 11, an FM signal processing unit 12, a beacon processing unit 13, an input unit 14 and a voice recognition unit 15.

The control unit 1 has centralized control over the whole vehicle-mounted system 100. The GPS receiver 2 receives GPS signals (to be used for obtaining position information) transmitted from GPS satellites and outputs the received signals to the control unit 1. The gyro sensor 3 measures angular speed of the vehicle on which the vehicle-mounted system 100 is mounted and outputs a signal representing the measurement to the control unit 1. The vehicle speed sensor 4 detects revolving speeds of drive wheels on both sides of the vehicle, generates a vehicle speed pulse signal corresponding to the average of the detected revolving speeds, and outputs the vehicle speed pulse signal to the control unit 1. The record medium processing unit 5, storing a record medium such as a CD (Compact Disc) or DVD (Digital Versatile Disc) or being equipped with an HD (Hard Disk) as a record medium, has the function of reading out data stored in the record medium. In this first embodiment, digital map data necessary for the navigation function, for example, has been stored in the record medium.

The control unit 1 executes positioning calculation based on the signals outputted by the GPS receiver 2, while executing dead reckoning (i.e. calculation of the direction or traveling direction of the vehicle and distance, hereinafter abbreviated as "DR") based on the signals outputted by the gyro sensor 3 and the vehicle speed sensor 4. Based on the GPS positioning result and the DR positioning result (i.e. the current position and current traveling direction of the vehicle), the control unit 1 drives the record medium processing unit 5, extracts digital map data of an area around the current position of the vehicle from the record medium, and outputs the digital map data to the image processing unit 6. The image processing unit 6 converts the digital map data into analog map data by D/A (digital-to-analog) conversion and outputs the analog map data to the display unit 7 while superimposing a vehicle mark (for indicating the current position of the vehicle) on the analog map data. According to the signal (analog map data) supplied from the image processing unit 6, the display unit 7 displays a map of the area around the vehicle on its screen while displaying the vehicle mark at the center of the screen.

The ROM 8, which is accessed by the control unit 1 when the vehicle-mounted system 100 is started up (turned ON), stores programs to be executed by the control unit 1, various data, etc. The DRAM 9 and the SRAM 10 temporarily store programs and data loaded from the record medium processing unit 5 and the ROM 8, allowing free reading/writing of the programs and data for realizing high speed processing. The SRAM 10, having battery backup, can keep its memory contents while the power is off. The VRAM 11 is capable of retaining an image displayed on the display unit 7.

The FM signal processing unit 12 receives FM multiplex broadcasting signals, for example, extracts a desired signal from the received signals, and processes the extracted signal. The beacon processing unit 13 receives signals transmitted from optical beacons placed along main roads, radio beacons placed along expressways, etc. and processes the received signals. The signals received by the FM signal processing unit 12 and the beacon processing unit 13 may include the VICS (Vehicle Information and Communication System) signal supplied by the VICS center (in Japan), for example.

In the first embodiment, the display unit 7 is implemented by a well-known touch panel (of the pressure-sensitive type or the electrostatic type, for example) and thus serves also as an input device. The input unit 14 includes mechanical buttons (including the power switch) arranged on the front of the vehicle-mounted system 100, for example. When the input unit 14 is operated by the user, a signal corresponding to the operation is outputted by the input unit 14 to the control unit 1 and a process corresponding to the signal is executed by the control unit 1. The voice recognition unit 15 (also as a type of input device) recognizes voice of the user received by a microphone (unshown) and outputs a signal corresponding to the result of recognition to the control unit 1. Incidentally, all the operations (instructions) that are possible through the voice recognition unit 15 are also possible through the input unit 14.

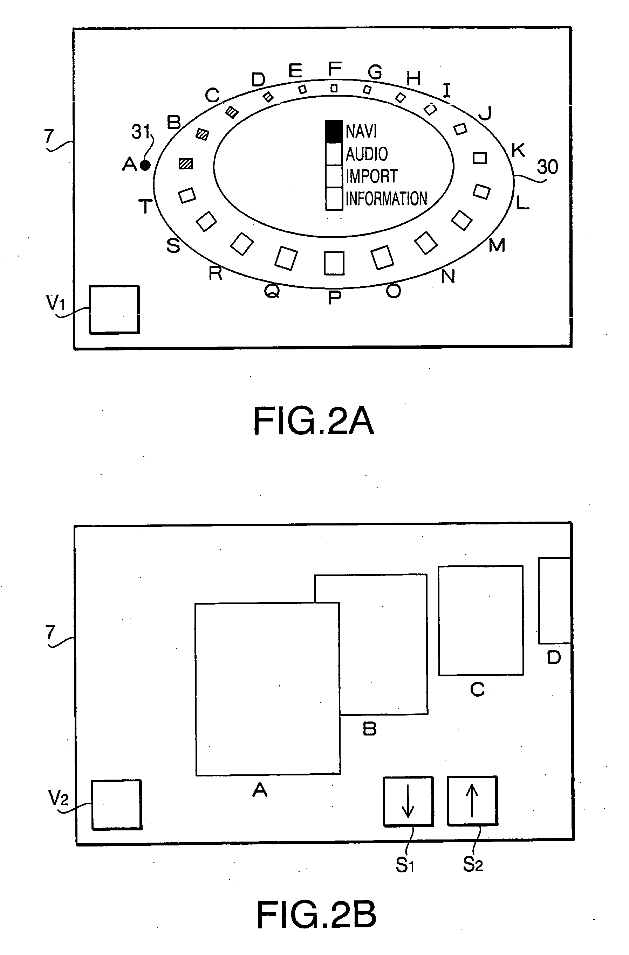

Figs. 2A and 2B show menu screens which are generated by the image processing unit 6 and displayed on the display unit 7. Fig. 2A shows an example of a menu screen which is displayed when the vehicle-mounted system 100 is powered ON or when one of the various input devices (the touch panel (display unit 7), the input unit 14 or the voice recognition unit 15) is operated by the user in order to view the menu screen. It should be noted that the menu items included in the menu may be ones determined when the vehicle-mounted system 100 was shipped or one the user set by operating the various input devices.

When the menu screen as shown in Fig. 2A is displayed, the image processing unit 6 draws, at the central area of the display unit 7, rectangular marks associated with character strings "NAVI", "AUDIO", "IMPORT" and "INFORMATION" (which will be referred to as "NAVI" mark, "AUDIO" mark, "IMPORT" mark and "INFORMATION" mark in the following description). The "NAVI" mark is for displaying menu items regarding the navigation (e.g., registered points or VICS information corresponding to the map data). The "AUDIO" mark is for displaying the menu items regarding the audio/visual matters (e.g., settings of equalizer, tunes registered as favorites, preset radio/TV broadcasts, etc.). The "IMPORT" mark is for displaying the menu item regarding the data imported from an external device. The "INFORMATION" mark is for displaying the menu items regarding various pieces of information including the user's personal information (e.g., a user name, the address, the contact information, which may be input through the touch panel or input unit 14). Fig. 2A shows a state where the "NAVI" mark is selected (blacked out in the drawing).

The image processing unit 6 draws a correlation diagram 30 around the above-described rectangular marks. The correlation diagram 30 has an annular part having a predetermined width (in the radial direction) placed in a virtual three-dimensional space. The annular part is displayed such that it is inclined, with respect to a screen surface of the display unit 7, by a predetermined angle in a direction where the annular part is apart from the screen surface of the display unit 7. Due to this virtual arrangement, the annular part appears on the display unit 7 such that a portion closer to the user (i.e., lower portion in Fig. 2A) has a larger width, while a portion spaced from the user (i.e., the upper portion of the annular part) has a smaller width. The correlation diagram 30 is configured to be rotatable about a central axis (not shown) in response to a predetermined operation.

The correlation diagram 30 is configured such that, on the annular part, twenty rectangular shaped menu items associated with letters A-T are arranged along the circular direction. The menu items will be referred to as menu item "A", menu item "B", ..., menu item "T". Since the "NAVI" mark is selected in Fig. 2A, the twenty menu items "A" through "T" are all related to the navigation. The menu items "A" through "T" are fixed with respect to the annular part. Therefore, if the annular part is rotated, the menu items "A" through "T" are also rotated. That is, the correlation diagram 30 rotates integrally. There is a black dot 31 on a left-hand side of the annular part. The black dot 31 indicates the currently selected menu item. In Fig. 2A, the menu item "A" is located next to the black dot 31, and therefore, Fig. 2A shows a case where the menu item "A" is currently selected.

Further, in this illustrative embodiment, four menu items starting from the one next to the black dot 31 and subsequently arranged three menu items in the clockwise direction (i.e., the menu items "A" through "D") are displayed in a menu screen shown in Fig. 2B (described later). In the menu screen shown in Fig. 2A, the four menu items (which will be displayed in the menu screen show in Fig. 2B) are indicated by hatching (oblique lines), while the other menu items are shown as white rectangles. It should be noted that each of the letters "A", "B", ... may be replaced with a character string describing each menu item, and thus, may include more than one letter.

The number of menu items shown by the correlation diagram 30 need not be limited to 20, but can be more than or less than 20. Further, the shape of the correlation diagram 30 need not be the annular shape, but a polygon, oval or any other continuous shape. It is of course preferable that the shape of the correlation diagram 30 meets the shape of the size of the display screen and the shape thereof. That is, depending on the shape and size of the display screen, the most efficient shape allowing as many menu items as possible with retaining the visibility may be determined. The configuration of the correlation diagram 30 is convenient since the menu items appear to be arranged three-dimensionally, relatively may items can be displayed in the limited size of the screen and the correlation among the menu items can be visually and sensuously grasped easily.

The image processing unit 6 draws a view switch icon V1 for switching a view of the menu screen. When the view switch icon V1 is operated (clicked), the image shown in the display unit 7 is switched from a state shown in Fig. 2A to a state shown in Fig. 2B.

The user operates the menu screen shown in Fig. 2B as follows. The user may directly touch one of the above-described marks, menu items, icons directly with the finger, or indirectly (e.g., by using the stylus pen (not shown)). Alternatively or optionally, the user may operate the menu screen by operating the input unit 14, using the voice recognition unit 15.

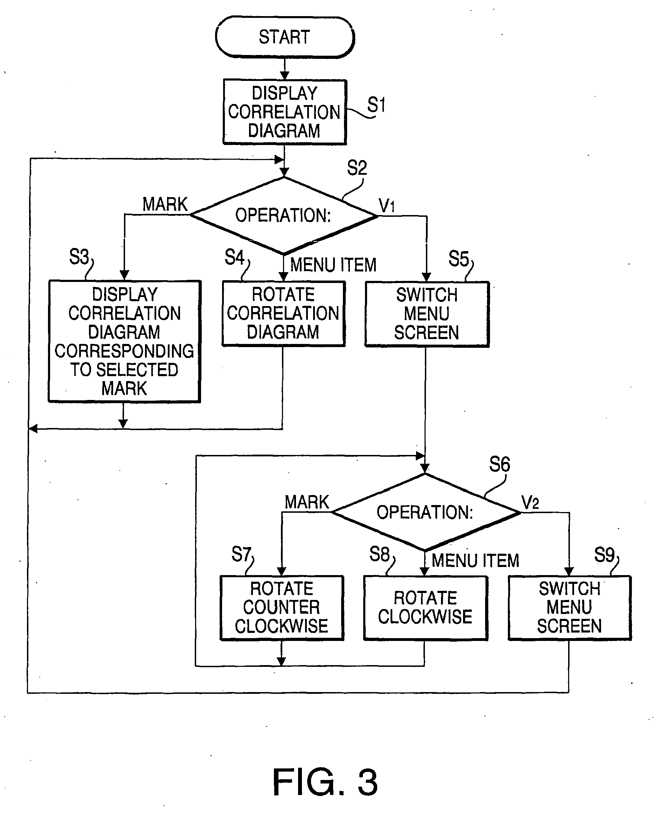

Fig. 3 shows a flowchart illustrating a menu display procedure which is executed when the user operates the menu screen. As described above, when the vehicle-mounted system 100 is powered ON or the operation to display the menu screen is performed, the image processing unit 6 draws a menu screen as show in Fig. 2A and displays the same on the display unit 7 (S1). It should be noted that the menu display procedure is finished when the user powered OFF the vehicle-mounted system 100 or another function (e.g., the navigation function) of the vehicle-mounted system 100 is actuated. According to the first embodiment, when the menu screen is drawn, the menu items corresponding to the "NAVI" mark are displayed. It is of course possible that the user can set the mark to which the menu screen is initially drawn.

If the user touches one of the marks at the central area of the menu screen shown in Fig. 2A (S2: MARK), the process retrieves data from the HDD of the record medium processing unit or ROM 8, and the image processing unit 6 draws the menu screen arranged with the menu items corresponding to the touched mark (S3).

If the user touches one of the menu items (S2: MENU ITEM), the image processing unit 6 draws the correlation diagram 30 as if it rotates about the rotation axis so that the touched menu item is located at the black dot 31 (S4). According to the illustrative embodiment, the rotation direction is determined such that the rotation angle is smaller. For example, if the user touches the menu item "P" in a state shown in Fig. 2A, the image processing unit 6 draws the correlation diagram 30 such that it rotates clockwise. For another example, if the user touches the menu item "E" in the state shown in Fig. 2A, the image processing unit 6 redraws the correlation diagram 30 such that it rotates counterclockwise. If the rotation angles in clockwise/counterclockwise directions are the same, the clockwise rotation, which may have priority, may be selected, for example.

When the user touches the selected menu item (i.e., the menu item next to the black dot 31), or other predetermined operation with respect to the selected menu item, the control unit 1 executes a procedure corresponding to the selected menu item. For example, in Fig. 2A, if the menu item "A" represents the information of a registered point, and the user touches the menu item "A", the control unit 1 may refer to the record medium processing unit 5 and retrieves appropriate map data, control the image processing unit 6 to display a map of the registered point and surrounding area on the display unit 7, determine a rout for navigation from the current position to the registered point with reference to the GPS signal.

If the user touches the view switch icon V1 (S2: V1), the image processing unit 6 draws an image which is like an enlarged partial view of the correlation diagram shown in Fig. 2A, on the display unit 7 as show in Fig. 2B (S5). Specifically, the image show in Fig. 2B includes the four menu items ("A", "B", "C" and "D") which are arranged clockwise starting from the position next to the black dot 31 (and which are hatched) in Fig. 2A. The first menu item "A" is the selected menu item, and the correlation among the menu item is retained. More specifically, the selected menu item is arranged at a top, and the remaining three menu items are sequentially arranged on the back of the selected menu item with retaining the positional relationship thereamong (i.e., the menu item "D" is behind the menu item "C", menu item "C" is behind the menu item "B", and menu item "B" is behind the menu item "A", and arrange clockwise). It should be noted that the number of menu items displayed on the menu screen after the view is switched from Fig. 2A to Fig. 2B need not be limited to four, and can be any other values depending on specification and/or setting.

In the switched menu screen show in Fig. 2B, only four menu items are shown. Therefore, in comparison with the menu screen shown in Fig. 2A, each menu item can be displayed in a larger size. Further, in Fig. 2A, the correlation diagram 30 is viewed from an obliquely upper position so that the menu items do not overlap with each other. In contrast, in Fig. 2B, in order to show each menu item as large as possible, the menu items are viewed along a direction substantially parallel with a plane on which the menu items are arranged (i.e., the plane of the correlation diagram 30 shown in Fig. 2A), or slightly angled therefrom (e.g., viewed along a direction in which part of menu items overlap). In the menu screen as shown in Fig. 2B, since the selected menu item and the menu items close to the selected menu item are displayed in a relatively large size, the visibility is well improved. If the user performs a predetermined operation (e.g., touches) with respect to one of the four menu items displayed on the menu screen shown in Fig. 2B, the control unit 1 executes a predetermined operation corresponding to the operated (touched) menu item.

In the menu screen shown in Fig. 2B, in addition to the four menu items, selection icons S1 and S2, and view switch icon V2 are included. If the user touches the selection icon S1 (S6: S1), the image processing unit 6 draws the menu items so that they appear to rotate counterclockwise (S7). Specifically, the selected menu item is moved outside the menu screen (i.e., delete the selected menu item), and three menu items arranged behind the selected menu item are moved to front by one step. Then, another menu item to be located behind the rearmost menu item of three is newly displayed. It should be noted that the rearmost menu item in Fig. 2B is the menu item "D", and the newly displayed menu item is the menu item "E". In summary, if the selection icon S1 is operated in the state shown in Fig. 2B, the menu items "B", "C", "D" and "E" are displayed in this order from the front to rear.

If the user touches the selection icon S2 (S6: S2), the image processing unit 6 draws the image so that the menu items appear to rotate clockwise (S8). Specifically, the rearmost menu item is moved outside the menu screen (i.e., the rearmost menu item is deleted), and the remaining three menu items are moved backward by one step. Further, another menu item that should be located in front of the three menu items (in the case of Fig. 2B, the menu item "T" should come in front of the menu item "A". In summary, if the selection icon S2 is operated in the state shown in Fig. 2B, the menu items "T", "A", "B" and "C" are displayed in this order from the front to rear.

If the user touches the view switch icon V2 (S6: V2), the image processing unit 6 draws the image so that the menu screen shown in Fig. 2B is switched to the menu screen shown in Fig. 2A (S9). In this case, the correlation among the menu items is retained in Fig. 2A and Fig. 2B. Therefore, the menu item next to the black dot 31 (Fig. 2A) and the menu item located at the frontmost position in Fig. 2B coincide with each other. When the menu screen is switched, the menu item next to the black dot 31 (Fig. 2A) and the frontmost menu item (Fig. 2B) coincide with each other. Thus, in the menu screen as shown in Fig. 2B, if the frontmost menu item is "F" and the view switch icon V2 is operated, the correlation diagram 30 as shown in Fig. 2A is displayed and the menu item "F" is located next to the black dot 31. If the menu item "J" is shown next to the black dot 31 in the menu screen as shown in Fig. 2A, and the view switch icon V1 is operated, the menu screen as shown in Fig. 2B is displayed, with the frontmost menu item being "J".

Hereinafter, further embodiments will be described in detail. In the description below, devices, components and processes similar to those in the first embodiment, the same reference numerals are used and description thereof will be omitted for the brevity.

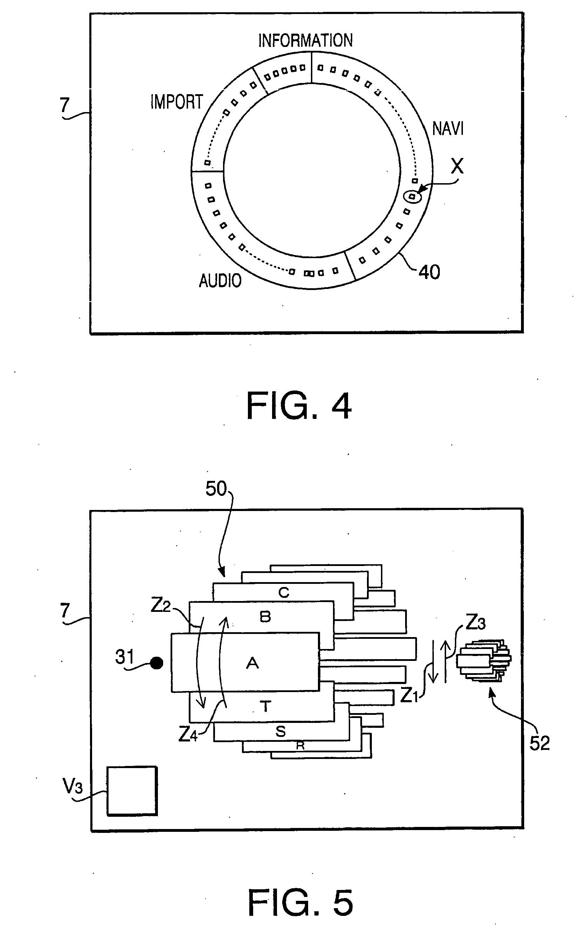

Fig. 4 shows a menu screen, corresponding to Fig. 2A, according to the second embodiment in this embodiment, all the categories ("NAVI", "AUDIO", "IMPORT" and "INFORMATION") are categorized using different colors and indicated in a single screen by a correlation diagram 40. It should be noted that, in the menu screen shown in Fig. 4, the view switch icon is not provided. Instead, according to the second embodiment, when the user touches a portion on the correlation diagram 40, the image processing unit 6 draws the menu screen similar to that shown in Fig. 2B depending on the portion the user touches. For example, if the user touches a position X, and if the menu item "K" is located at position X, the menu screen similar to that shown in Fig. 2B is displayed, in which the frontmost menu item is "K", followed by menu items "L", "M" and "N". Since the correlation diagram 40 indicates a large number of menu items in one screen, the identifying information such as the menu item names are not displayed. However, the switched menu screen (i.e., one similar to Fig. 2B) shows the correlation similar to the correlation diagram 40, by switching the menu screens, the user may grasp the correlation among the menu items visually and sensuously.

Fig. 5 shows a menu screen showing a correlation diagram 50 according to a third embodiment. The correlation diagram 50 employs different arrangement of menu items in comparison with the correlation diagram 30. As shown in Fig. 5, the correlation diagram 50 has a plurality of rectangular menu item panels which are arranged circularly and rotatably about a horizontal axis (not shown) extending in a horizontal direction of the display unit 7, within a virtual three-dimensional space. At a lower left position, the view switch icon V3 is displayed. If the user touches the view switch icon V3, the menu screen similar to that shown in Fig. 2B is displayed, in which the menu item panel next to the black dot 31 is shown as the frontmost menu item. Further, on a right-hand side end portion of the screen, an operation icon 52 is displayed. If the user slides a finger on the screen along an arrow Z1, the operation icon 52 rotates in the Z1 direction, and the correlation diagram 50 also rotates in Z2 direction about the rotational axis. If the user slides a finger on the screen along an arrow Z2, the operation icon 52 rotates in the Z2 direction, and the correlation diagram 50 also rotates in Z4 direction about the rotational axis.

According to the second and third embodiments, since the selected menu item can be displayed in larger size, the excellent visibility is retained, and the user can grasp the correlation among the menu items visually and sensuously.

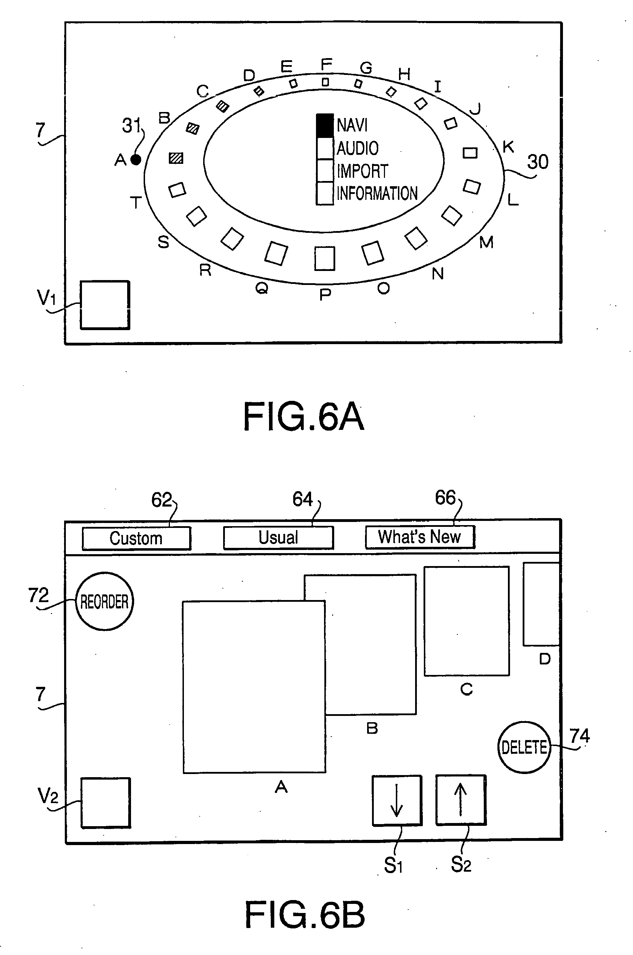

Figs. 6A and 6B show menu screens according to fourth embodiment. The menu screen shown in Fig. 6A is similar to that shown in Fig. 2A and is displayed on the display unit 7 when the vehicle-mounted system 100 is powered ON or the user makes a certain operation to display the menu screen. Fig. 6B shows another menu screen which is displayed on the display unit 7 when the view switch icon V1 provided in the menu screen shown in Fig. 6A is operated. According to the fourth embodiment, the menu items related to the marks ("NAVI" mark, "AUDIO" mark, "IMPORT" mark and "INFORMATION" mark) are set in an editing procedure described later and/or input through the touch panel and the input panel 14. The setting of the menu item is stored in the HDD of the record medium processing unit 5, and thus, will not be lost even if the vehicle-mounted system 100 is powered OFF.

In the menu screen shown in Fig. 6B, a task bar is displayed at an upper end of the screen. On the task bar, link buttons "Custom" 62, "Usual" 64 and "What's New" 66 are arranged. When the menu screen is switched, a menu corresponding to the "Custom" 62 (which menu will be referred to as a custom menu) is displayed. It should be noted that the custom menu is configured when the vehicle-mounted system 100 is shipped if the menu editing procedure has not been executed, and will be modified as the menu editing procedure is executed.

In the menu screen shown in Fig. 6B, in addition to the task bar and four menu items, selection icons S1 and S2, view switch icon V2, reorder icon 72 and delete icon 74 are displayed.

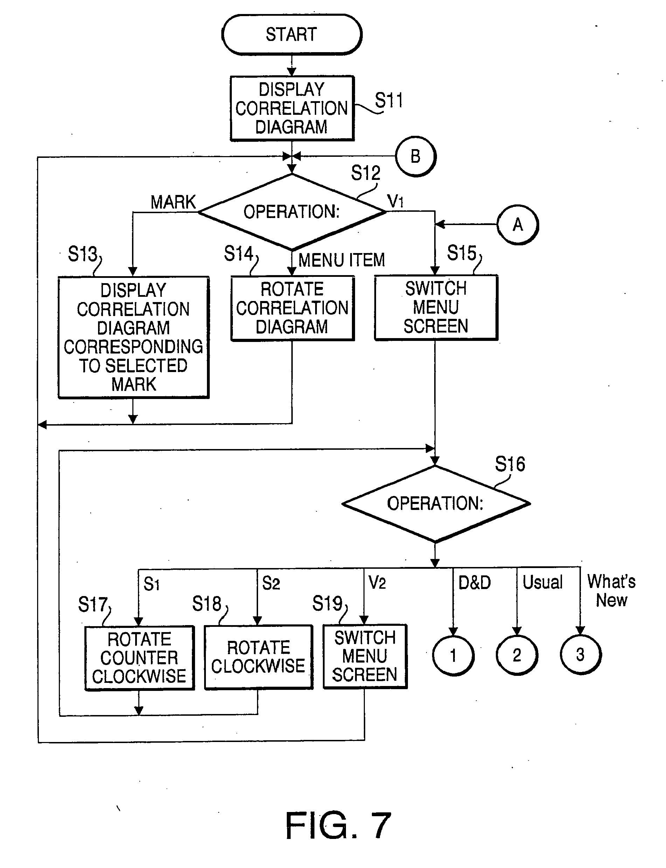

Fig. 7 shows a flowchart illustrating a menu display procedure which is executed when the menu screen is operated. It should be noted that steps S11-S15, S 17-S 19 are similar to S1-5, S7-9 of Fig. 3 and description thereof is omitted.

After the menu screen has been switched to the menu screen shown in Fig. 6B as S 15 is executed, if the user drags and drops a menu item on the reorder icon 72 or the delete icon 74, or if the user touches the "Usual" 64 or "What's New" 66 button (S16: Usual or What's New), the menu editing procedure to edit the menu is executed. Hereinafter, the menu editing procedure according to the fourth embodiment will be described.

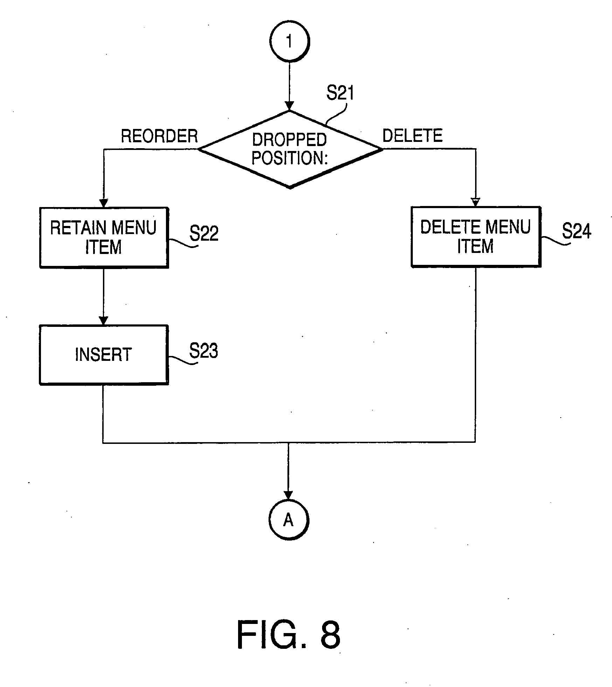

Fig. 8 shows a flowchart illustrating the menu editing procedure which is executed when the reorder icon 72 or delete icon 74 is used. In the menu screen shown in Fig. 6B, if the user touch one of the menu items, drags the same (with the finger contacting the screen), and drops the menu item on the reorder icon 72 (i.e., the user removes the finger from the screen) (S21: REORDER), the menu item appears to be held on the reorder icon 72 (S22). The menu item held by the reorder icon 72 (hereinafter, referred to as held menu item) is, for example, reduced on the screen so that it is displayed inside the reorder icon 72.

As the menu item is held in the reorder icon 72, when the user rotate the menu items using the selection icons S 1 and S2, and drags and drops the held menu item between two menu items, the held menu item is inserted at the dragged position (S23). With this operation, the menu items are reordered. For example, if the menu item "B" is dragged and dropped on the reorder icon 72, the selection icons S1 and S2 are operated so that the menu items "K"-"N" are displayed. Then, if the user drags and drops the held menu item "B" between the menu items "L" and "M", the arrangement of the menu items is changed such that "A", "C", "D", ...., "L", "B", "M", ....

If the menu item is dragged and dropped on the delete icon 74 (S21: delete), the menu item is deleted from the menu screen (S24). It should be noted that, before deleting the menu item, a message requesting the user to confirm that the menu item can be deleted may be displayed on an certain position (e.g., at the center) of the menu screen.

As described above, the correlation between the menu screens shown in Fig. 6A and Fig. 6B is always retained. The reordering or deletion of the menu item described above is also reflected in the correlation diagram 30 shown in Fig. 6A. That is, after the menu items are edited and the menu screen is switched to the correlation diagram 30 (Fig. 6A), the correlation diagram reflecting the edition of the menu items is drawn and displayed on the display unit 7.

According to the above configuration, the user can reorder or delete the menu items with confirming the correlation among the menu items. Thus, the user can recognize the editing results visually and sensuously, and can use the menu easily after the edition thereof.

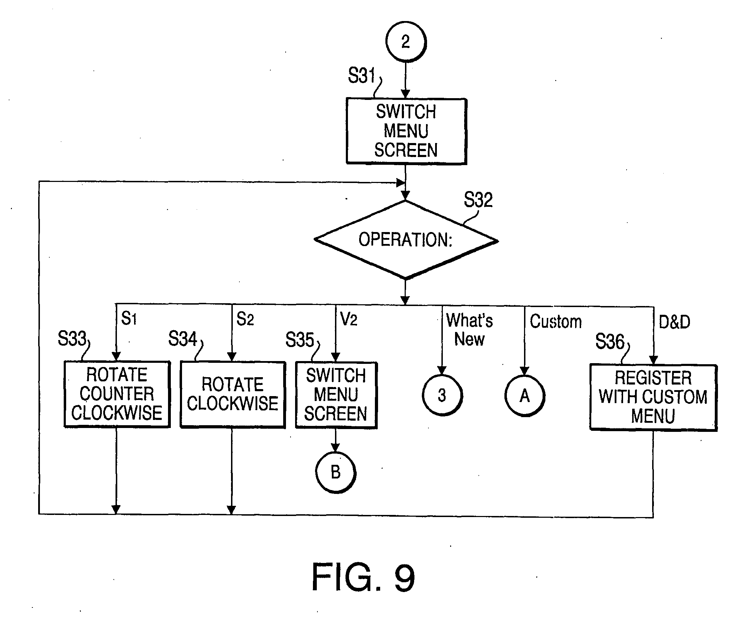

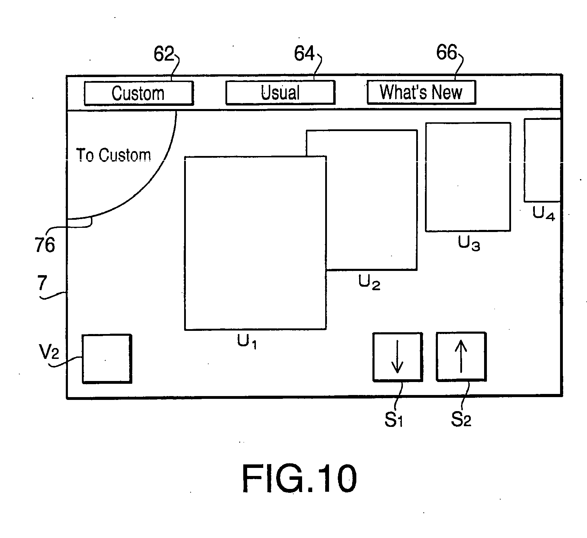

Fig. 9 shows a flowchart illustrating a menu editing procedure which is executed when the "Usual" button 64 provided on the task bar is touched. When the user touch the "Usual" 64 on the menu screen shown in Fig. 6B, the image processing unit 6 draws a menu (see Fig. 10) corresponding to the "Usual" in S31. In this menu screen, the task bar, selection icons S1 and S2, view switching icon V2, described above are displayed. Further, for menu items "U1 ", "U2", "U3" and "U4" are displayed on the upper left of the menu screen, an area 76 labeled with "To Custom" is displayed.

In the menu corresponding to the "Usual" button 64, the frequently used menu items (e.g., top twenty menu items) are arranged (hereinafter, the menu corresponding to the "Usual" button 64 will be referred to as a high-frequency menu). The control unit 1 always counts execution of each operation, and the arrangement (order) of the menu items is automatically determined based on the count value and updated. It should be noted that the menu items arranged in this procedure is menu items regarding the navigation, if the correlation diagram 30 of "NAVI" is selected in the menu screen shown in Fig. 6A. If the correlation diagram 30 of the "AUDIO" is selected, the menu items regarding the audio/visual are arranged. In this example, since the "NAVI" is selected, twenty menu items regarding the navigation and having higher frequencies are displayed.

In such a situation, if the user touches the "Custom" button 62 (S32: Custom), the image processing unit 6 draws a custom menu as shown in Fig. 6A (see S 15 of Fig. 7). If the user touches the selection icon S1 (S32: S1), the image processing unit 6 draws the menu items such that they appear to rotate counterclockwise (S33). If the user touches the selection icon S2 (S32: S2), the image processing unit 6 draws the menu items such that they appear to rotate clockwise (S34). If the user touches the view switch icon V2 (S32: V2), the image processing unit 6 draws the menu so that the menu screen of the correlation diagram 30 shown in Fig. 6A is displayed (S35).

If the user drags a menu item to the area 76 and drops the same on the area 76 (S32: D&D), the menu item is registered with the custom menu (S36). If the number of the menu items of the custom menu is less than 20, the menu item is merely added to the custom menu. If the number of the menu items is 20, it is necessary to delete one menu item. In such a case, the user may determine the menu item to be deleted. Alternatively, the menu item having the lowest usage frequency may be automatically deleted. In the latter case, it is preferable that a message requiring the user to confirm that the menu item is deleted from the custom menu.

As described above, the correlation among the menu items is retained between the menu screens shown in Fig. 6A and Fig. 6B. That is, the edition of the menu items using the high-frequency menu, the edited result is reflected in the correlation diagram 30 similar to a case of reordering or deletion.

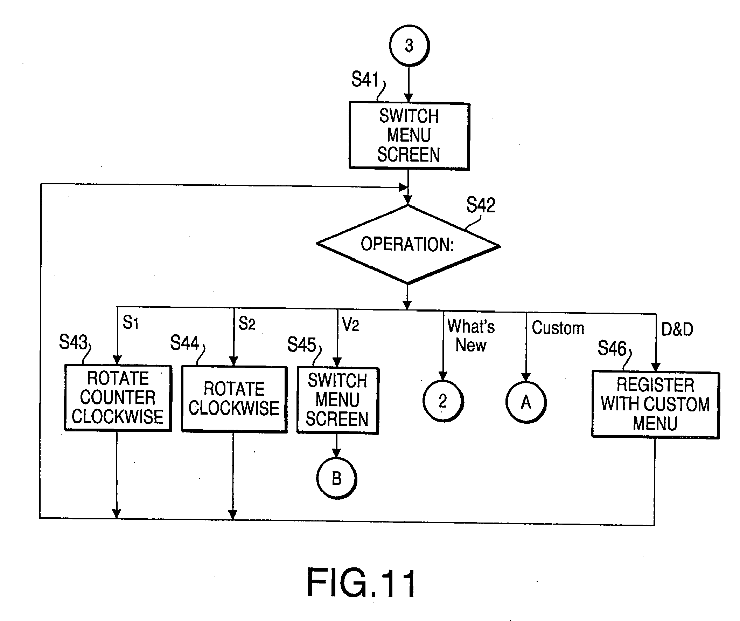

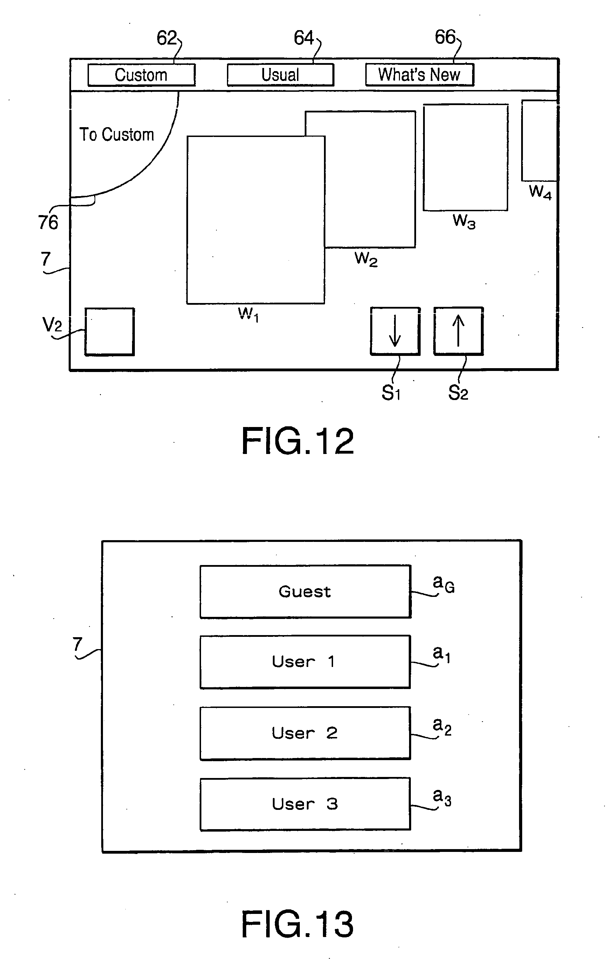

Fig. 11 shows a flowchart illustrating a menu editing procedure when the "What's New" button 66 is operated. When the user touches the "What's New" button 66 in the menu screen shown in Fig. 6B, the image processing unit 6 draws a menu screen corresponding to the "What's New" button 66 as shown in Fig. 12 (S41). In this menu screen, the task bar as described above, the selection icons S 1 and S2, the view switch icon V2 and the area 76 are displayed the for menu items W1, W2, W3 and W4 are also displayed.

In the menu corresponding to the "What's New" button 66, the menu items related to the latest (e.g., top 20) information including information regularly or irregularly obtained by the GPS receiver 2, FM signal processing unit 12, beacon processing unit 13 and network connecting unit (not shown) and the like, or destination information set by the navigation function. (Hereinafter, the menu corresponding to the "What's New" button 66 will be referred to as new information menu.) The control unit 1 measures time when the information is obtained through the network or the operation is made, and the order of the menu item may be automatically executed based on the measured times. Note, the menu items arranged here are, similar to the high-frequency menu, related to the navigation when the correlation diagram 30 of the "NAVI" is selected in the menu screen shown in Fig. 6A, and related to audio/visual when the correlation diagram 30 of the "AUDIO" is selected in the menu screen shown in Fig. 6A.

In such a situation, if the user touches the "Custom" button 62 (S42: Custom), the image processing unit 6 draws a custom menu as shown in Fig. 6A (see S 15 of Fig. 7). If the user touches the selection icon S1 (S42: S1), the image processing unit 6 draws the menu items such that they appear to rotate counterclockwise (S43). If the user touches the selection icon S2 (S42: S2), the image processing unit 6 draws the menu items such that they appear to rotate clockwise (S44). If the user touches the view switch icon V2 (S42: V2), the image processing unit 6 draws the menu so that the menu screen of the correlation diagram 30 shown in Fig. 6A is displayed (S45).

If the user drags a menu item to the area 76 and drops the same on the area 76 (S42: D&D), the menu item is registered with the custom menu (S46). If the number of the menu items of the custom menu is less than 20, the menu item is merely added to the custom menu. If the number of the menu items is 20, it is necessary to delete one menu item. In such a case, the user may determine the menu item to be deleted. Alternatively, the menu item having the oldest register time may be automatically deleted. In the latter case, it is preferable that a message requiring the user to confirm that the menu item is deleted from the custom menu.

As described above, the correlation among the menu items is retained between the menu screens shown in Fig. 6A and Fig. 6B. That is, the edition of the menu items using the new information menu, the edited result is reflected in the correlation diagram 30 similar to a case of reordering or deletion.

According to the fourth embodiment, by picking up appropriate menu items from the automatically updated high-frequency menu or new information menu, a useful custom menu can be created. Therefore, a burden to the user who creates the custom menu can be reduced considerably.

Next, the vehicle-mounted system 100 according to the fifth embodiment will be described. When the vehicle-mounted system 100 according to the fifth embodiment is powered ON, a user account selection screen as shown in Fig. 13 is displayed on the display unit 7. As shown in Fig. 13, on this screen, an account icon a_{G} labeled "Guest", an account icon a₁ labeled "User 1", an account icon a₂ labeled "User 2" and an account icon a₃ labeled "User 3" are displayed.

The "Guest" account is not protected by a password, and any user can log in using this account. Thus, the user can use the vehicle-mounted system 100 by touching the account icon a_{G}. It should be noted that, since this account is commonly used, it is preferable that certain restriction is effected so that profile setting, which can be done by other accounts, should be restricted.

In contrast, the "User 1", "User 2" and "User 3" accounts are password-protected. Therefore, when the user log-in in one of these accounts, a password should be input using the input unit 14 and/or touch panel 15. Instead of the password authentication, biometrics authentication (e.g., finger print authentication using a scanner (not shown), iris-authentication, or voice print authentication using the voice recognition unit 15) may be employed.

According to the fifth embodiment, the user can log-in the above accounts and execute different profile settings. In the following description, for the sake of explanation, it is assumed that a user (user one) who has a good sight uses the "User 1" account, and another user (user two) who does not have a good sight uses the "User 2" account.

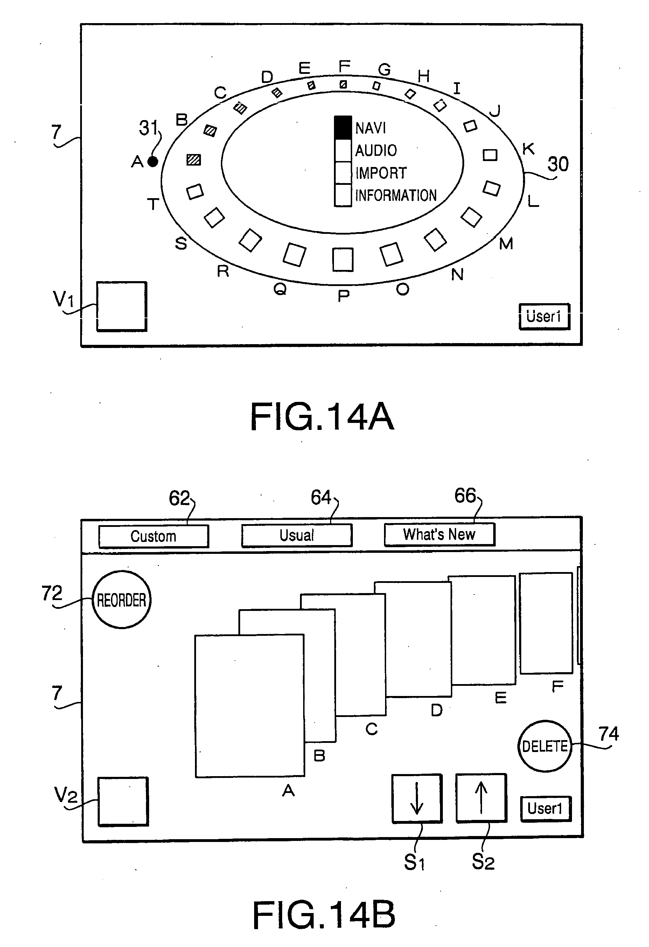

Figs. 14A and 14B are menu screens in accordance with the fifth embodiment. The screen shown in Fig. 14A is displayed when the user logs in the "User 1" account of the account selection screen shown in Fig. 13, and the image processing unit 6 creates the menu screen and displays the same. In order to notify the user that the login account is "User 1", an identifier ("User 1") is displayed on the lower left portion on the menu screen (see Figs. 14A and 14B).

The "INFORMATION" mark displayed on the menu screen shown in Fig. 14A is for displaying the menu items regarding the personal information of the log-in user (i.e., user 1 in this case). In the fifth embodiment, the menu items related to each mark: "NAVI" mark, "AUDIO" mark, "IMPORT" mark and "INFORMATION" mark, can be set as a profile for each user (i.e., each account). The user-basis profiles set as above are stored in the HDD or the like of the record medium processing unit 5 for individual user. Therefore, the profile will not be lost even if the vehicle-mounted system is powered OFF.

In the fifth embodiment, the menu displaying procedure as in the fourth embodiment (see Figs. 7, 8, 9 and 11) will be executed. In the fifth embodiment, the menu displaying procedure is executed, when the user should login one of the accounts, or an operation to display the menu screen is to be operated. In the fifth embodiment, as in the other embodiments, when the vehicle-mounted system starts up, the menu items corresponding to the "NAVI" mark are displayed. It is possible to change this configuration, and the menu items corresponding to any mark can be displayed when the vehicle-mounted device 100 is started up. For example, the menu items corresponding to the "NAVI" mark may be displayed when a user 1 logs in as the user 1, while when the menu items corresponding to the "AUDIO" mark may be displayed when the user logs in as the user 3.

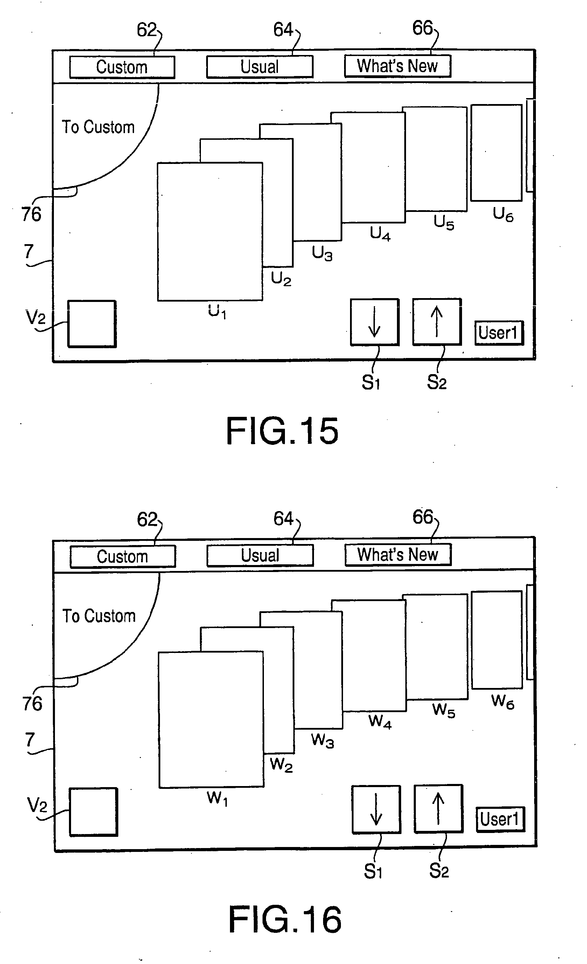

Fig. 14B shows a menu screen when the view switch icon V 1 is operated. Fig. 15 is the menu screen when the user touches the "Usual" button 64 in the menu screen of Fig. 14B. Fig. 16 is the menu screen when the user touches "What's New" button 66 when the menu screen 14B is displayed. In each of the menu screens shown in Figs. 14B, 15 and 16, except that six menu items are displayed and the identifier ("User 1 ") are displayed, the configuration is similar to the menu screens shown in Figs. 6B, 10 and 12.

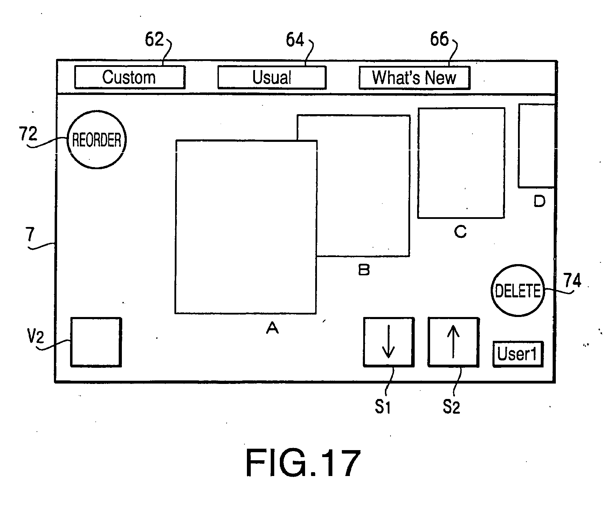

The number of menu items displayed in each menu screen need not be limited to six, and can be set arbitrarily by each user. Fig. 17 shows the menu screen when the user logs in the "User 2" account (i.e., the menu screen for user 2). For the user 1, as described above, the number of the menu items are set to six, while the number of the menu items for the user 2 is set to four. Therefore, in the menu screen shown in Fig. 17, the size of each menu item is larger that that for the user 1, and thus, the font size (e.g., the size of the font indicating the content "A", "B",... of each menu item) can be increased. With this configuration, even the user 2 who does not have a good sight can recognize the menu screen. In a particular case, for the user who does not have a good sight, instead of displaying the correlating diagram 30, the menu screen as shown in Fig. 17 may be displayed as the top menu.

According to the fifth embodiment, by picking up appropriate menu items from the automatically updated high-frequency menu or new information menu, useful custom menu can be crated. Therefore, the burden to the user who intends to create the custom menu can be well reduced.

According to the fifth embodiment, as described above, the reordering procedure, deleting procedure or setting of the menu which has been edited using the high-frequency menu and new information menu are stored for each user. Thus, each user can customize the menu in accordance with the user's preference, and can operate the vehicle-mounted system 100 cozily. The user having a good sight may increase the number of menu items displayed on a screen and reduce the size of the menu items and font size so that troublesome operation such as the rotation of the menu items and/or scrolling of the menu screen can be reduced. The user having a bad sight may reduce the number of menu items displayed on a screen, and increase the size of the menu items and the font size so that the content can be recognized without fail.

Other items that can be set includes font type, overall layout, color and contrast of the menu screens. Further, when the motion sight of each user is taken into account, the rotation speed of the menu items in the menu screen may be set. When the user's audibility is taken into account, the volume of the guiding message toward the destination may be set.

In the fifth embodiment, the user operates various operating member to set the profile. This can be modified such that various settings can be completed by inputting predetermined information (e.g., age, power of vision, etc.). In such a case, the settings (e.g., the display size of the menu items) and the age (power of vision) are stored in a related manner in the HDD of ROM 8 of the record medium processing unit 5. In such a case, the control unit 1 retrieves the corresponding settings from the HDD or the like in response to input of the predetermined information, and outputs the retrieved setting to the image processing unit 6, the image processing unit 6 draws the menu screen reflecting the settings. For example, if "twenties" is input as the predetermined information, the menu screen may show menu items whose size is relatively small with small font, and the number of the menu items may be relatively large. In contrast, if "seventies" is input as the predetermined information, the menu screen may show menu items whose size is relatively large with large font, and the number of the menu items may be relatively small.

It should be noted that the invention need not be limited to the configurations of the illustrative embodiments described above and various modification can be made according to aspects of the invention.

## Claims

1. A method of displaying a menu including a plurality of menu items, comprising the steps of:
displaying an orbital menu by arranging the plurality of menu items on a looped orbital;
first detecting a signal for switching the orbital menu;
extracting a menu item located at a predetermined position on the orbital and at least one menu items located around the menu item located at a predetermined position; and
displaying an extracted menu by arranging the extracted menu items with retaining correlation among the menu items on the orbital menu.

2. The method according to claim 1, further comprising the steps of:
selecting one of the menu items on the orbital; and
moving all the menu items with the order thereof being retained so that the selected one of the menu items is located at a predetermined position.

3. The method according to claim 1 or 2,
wherein, when the extracted menu is displayed, the menu item located at the predetermined position is displayed to be largest in size.

4. The method according to any one of claims 1-3,
further comprising the steps of:
second detecting signal for switching the extracted menu;
displaying all the menu items with the correlation among the menu items being retained when the signal is detected by the second detecting.

5. The method according to claim 4, further comprising the step of:
arranging the menu item displayed to have the largest size at the predetermined position when the menu is switched to the orbital menu.

6. The method according to any one of claims 1-5,
wherein the displaying the orbital menu includes displaying the orbital three-dimensionally in a virtual three-dimensional space.

7. The method according to any one of claims 1-5,
wherein the displaying the orbital menu includes displaying the orbital two-dimensionally in a virtual two-dimensional space.

8. The method according to any one of claims 1-7,
wherein the looped orbital has an annular shape.

9. The method according to any one of claims 1-8,
further comprising displaying the orbital menu with being categorized.

10. The method according to claim 9,
wherein categorization is indicated by color.

11. The method according to any preceding claim, further comprising the steps of:
removing one of the menu items from the extracted menu;
moving the removed one of the menu items to a predetermined position in the extracted menu; and
executing a predetermined edition process in accordance with the position where the removed one of the menu items is moved.

12. A method of editing a menu including a plurality of menu items arranged on a predetermined orbital, comprising the steps of:
removing one of the plurality of menu items from the orbital;
moving the removed menu to a predetermined position in the menu screen; and
performing a predetermined editing process in accordance with the position where the menu is move.

13. The method according to claim 11 or 12,
wherein the step of performing deletes the menu item moved to the predetermined position from the menu.

14. The method according to claim 11, 12 or 13,
wherein the step of performing holds the menu item moved to the predetermined position at the predetermined position, and
wherein the step of performing inserts the held menu item between arbitrarily selected menu items on the orbital, the inserted menu item being held between the arbitrarily selected menu items.

15. A method of editing first menu including a plurality of menu items arranged on a first orbital, comprising the steps of:
removing one of a plurality of menu items included in a second menu, which is different from the first menu, arranged on a second orbital which is different from the first orbital;
moving the menu item removed from the second orbital to a predetermined position in a screen of the second menu; and
adding the menu item moved to the predetermined position to the first menu.

16. The method according to claim 15,
further comprising a step of arranging a menu item having a high usage frequency in the second menu prior to other menu items.

17. The method according to claim 16,
wherein a menu item having the lowest usage frequency is removed from the first menu when the step of adding adds the menu item to the first menu.

18. The method according to claim 15,
further comprising a step of arranging a menu item regarding new information in the second menu prior to other menu items.

19. The method according to claim 18,
wherein a menu item which was processed earliest is removed from the first menu when the step of adding adds the menu item to the first menu.

20. A computer program product comprising a computer accessible instructions that cause a computer to execute the method of any preceding claim.

21. A computer program product comprising computer readable instructions that cause a computer to operate to edit a menu including a plurality of menu items which are arranged on a predetermined orbital, the instructions further causing the computer to:
arrange at least one icon for executing at least one predetermined editing procedure at least a position within a screen provided by the menu;
allow a menu item to move within the menu screen in response to selection of the menu item by a user; and
execute a predetermined operation corresponding to the icon when the selected menu item is moved onto the icon.

22. The computer program product according to claim 21,
wherein the predetermined operation includes deletion of the menu item moved to the at least one icon from the menu.

23. The computer program product according to claim 21 or 22,
wherein the predetermined operation includes the step of:
causing the menu item moved to at least one icon to be held by the icon;
causing the menu item to be held between other menu items on the orbital when the menu item held by the icon is inserted between the other menu items on the orbital.

24. A menu displaying device configured to display a menu including a plurality of menu items, comprising:
an orbital menu displaying unit configured to display an orbital menu by arranging the plurality of menu items on a looped orbital;
an operable member used to operate a menu;
a first detecting unit configured to detect a signal, which is issued in response to operation of the operable member, for switching the orbital menu;
an extracting unit configured to extract a menu item located at a predetermined position on the orbital and at least one menu items located around the menu item located at a predetermined position; and
an extracted menu displaying unit configured to display an extracted menu by arranging the extracted menu items with retaining correlation among the menu items on the orbital menu.

25. The menu displaying device according to claim 24,
wherein when one of the menu items on the orbital is selected by operation of the operable member, the orbital menu displaying unit operates to draw an image such that all the menu items are moved with the order thereof being retained so that the selected one of the menu items is located at a predetermined position.

26. The menu displaying device according to claim 24 or 25,
wherein, when the menu is switched to the extracted menu, the extracted menu displaying unit displays a menu item located at the predetermined position to have the largest size.

27. The menu displaying device according to any one of claims 24-26,
further comprising a second signal detecting unit that detects the second signal, which is issued in response to the operation of the operable member, for switching the extracted menu,
wherein, when the signal is detected by the second detecting unit, all the menu items are displayed with the correlation among the menu items being retained

28. The menu displaying device according to claim 27,
wherein, when switched to the orbital menu, the orbital menu displaying unit arranges the menu item displayed to have the largest size at the predetermined position.

29. The menu displaying device according to any one of claims 24-28,
wherein the orbital menu displaying unit displays the orbital three-dimensionally in a virtual three-dimensional space.

30. The menu displaying device according to any one of claims 24-28,
wherein the orbital menu displaying unit displays the orbital two-dimensionally in a virtual two-dimensional space.

31. A menu editing device configured to edit menu including a plurality of menu items arranged on a predetermined orbital, the menu editing device comprising:
an icon arranging unit configured to arrange an icon for executing a predetermined editing procedure at a position within a menu screen provided by the menu;
an operable member used to operate the menu;
a selection detecting unit that detects a selection of one of the plurality of menu items by the operable member;
a movement control unit that controls the menu item detected to be selected to move in the menu screen; and
an edit processing unit configured to execute, when the menu item is moved onto an icon, a predetermined edit process corresponding to the icon.

32. The menu editing device according to claim 31,
wherein the edit processing unit deletes the menu item moved onto the icon from the menu.

33. The menu editing device according to claim 31 or 32,
wherein the edit processing unit holds the menu item moved onto the icon on the icon, and
wherein, when the menu item held on the icon is moved between arbitrarily selected menu items on the orbital, the edit processing unit holds the menu item between the arbitrarily selected menu items.

34. A menu editing device configured to edit a first menu including a plurality of menu items arranged on a first orbital, the menu editing device comprising:
an icon arranging unit configured to arrange an icon for executing a predetermined editing procedure at a position within a menu screen provided by a second menu, which is different from the first menu and including a plurality of menu items on a second orbital different from the first orbital;
an operable member used to operate the first menu and the second menu;
a selection detecting unit that detects a selection of one of the plurality of menu items of the second menu by the operable member;
a movement control unit that controls the menu item detected to be selected to move in the menu screen of the second menu; and
an edit processing unit configured to add, when the menu item is moved onto an icon, the menu item to the first menu.

35. A menu editing device configured to edit a menu including a plurality of menu items, comprising:
an orbital menu displaying unit that displays an orbital menu by arranging the plurality of menu items on a looped orbital;
an operable member to operate the menu;
a first signal detecting unit configure to detect a signal, which is output in response to operation of the operable member, for switching the orbital menu;
an extracting unit configure to extract a menu item located at a predetermined position on the orbital and at least one menu items located around the menu item located at the predetermined position;
an extracted menu displaying unit configure to display an extracted menu by arranging the extracted menu items with retaining correlation among the menu items on the orbital menu;
an icon arranging unit that arranges an icon for executing a predetermined editing operation at an portion within a menu screen provided by the extracted menu;
a selection detecting unit that detects selection, by the operable member, of the a menu item in the extracted menu;
a movement control unit that controls movement of the detected menu item in the extracted menu; and
an edit processing unit that executes a predetermined edition process, when the movable menu item is moved onto the icon, in accordance with the icon.

36. A vehicle-mounted system, comprising:
an input unit used for inputting predetermined information assigned to each user;
a storage unit storing a plurality of pieces of menu setting information related to the predetermined information;
a data retrieving unit configured to retrieve, in accordance with input predetermined information, corresponding menu setting information from the storage unit; and
a menu displaying unit configured to refer to the retrieved menu setting information and displays a menu in a form corresponding to the menu setting information.

37. A vehicle-mounted system, comprising:
an input unit used for inputting predetermined information;
a storage unit storing a plurality of pieces of menu setting information related to the predetermined information;
a data retrieving unit configured to retrieve, in accordance with input predetermined information, corresponding menu setting information from the storage unit; and
a menu displaying unit configured to refer to the retrieved menu setting information and displays a menu in a form corresponding to the menu setting information.

38. The vehicle-mounted system according to claim 37,
wherein the predetermined information includes at least one of age and a power of vision.

39. The vehicle-mounted system according to claim 36, 37 or 38,
wherein the menu setting information includes a setting of visibility of the menu.

40. The vehicle-mounted system according to any one of claims 36 to 39,
wherein the menu setting information includes at least one of a size, a type of a font of character string included in the menu, the number of menu items, a display size, a content of the menu, an overall layout of the menu, and a color of the menu.

41. The vehicle-mounted system according to any one of claims 36-40,
wherein the input unit includes an operation unit allowing a user to input a password.

42. The vehicle-mounted system according to any one of claims 36-41,
wherein the input unit includes an authentication unit capable of executing a biometrics authentication.
